# EUROPEAN PATENT SPECIFICATION

(11) **EP 1 944 847 B1**
(45) Date of publication and mention of the grant of the patent: **12.03.2014**
(21) Application number: 08150190.0
(22) Date of filing: 11.01.2008
(51) Int. Cl.: H02G 3/12

(54) **Installation box with removable mounting device**
Installationskasten mit abnehmbarer Montagevorrichtung
Boîte d'installation avec dispositif de montage amovible

(30) Priority: 15.01.2007 SE 0700105
(43) Date of publication of application: 16.07.2008
(73) Proprietor: Thorsman & Co. AB, 611 29 Nyköping (SE)
(72) Inventor: Hansson, Kenth, 31291, LAHOLM (SE)
(74) Representative: Karlsson, Leif Karl Gunnar

(56) References cited:
- EP-A1- 0 923 176
- EP-A1- 1 303 017
- DE-U1- 9 311 023

## Description

### Technical field

The present invention relates to an installation box in accordance with the preamble to appended Claim 1, In particular, the present invention relates to an improved installation box with removable mounting devices which may be adapted in response to the thickness of a wall.

### Background art

In electric installations in buildings, use is made of installation boxes in order to be able to provide an insulated space for connection points and connection of terminal devices and electricity sockets of different types.

In electric installations in newly-erected wall and ceiling or roof constructions, installation boxes of the recessed type are secured either in that they are nailed to, for example, the battens of a wall or by being cast in concrete in, for example, a reinforced wall or ceiling or roof construction.

When existing electric installations in, for example, a wall construction need to be supplemented with a recessed installation box, use is advantageously made of boxes where the technician, with the aid of screws, can activate mounting devices in order to adapt the mounting of the installation box in response to the thickness of a wall. In the use of such an installation box, it is desirable that the box may readily be inserted in and removed from a mounting space intended for the box in, for example, a wall construction without the mounting devices catching in the edges of the mounting space and thereby making it difficult to mount and dismount the installation box in the mounting space. It is also desirable to be able, with as few screws as possible, to steplessly adjust the mounting devices in order to be able to mount the installation box in walls of different panel thicknesses, and, using the same screws, to be able to fix electric fittings in the installation box at the same time as the box is mounted in the wall.

Further, it is desirable to be able to optimise the materials in both the installation box and the mounting devices in order by such means to obtain a box which may be adapted in response to the environment and the wall or roof construction in which it is to be mounted. This is best achieved if the mounting devices are removably disposed at the installation box.

Further, it is desirable to be able to fix a box as securely as possible, regardless of whether the wall or the roof in which the box is to be mounted is thick or thin. In order to be able to attain as secure fixing as possible, it is desirable if the abutment surface between the mounting device and the wall or the roof is as large as possible, and that the mounting devices of the installation box are rigid so as to be able to withstand the stresses which occur when, for example, a user is to pull out the plug attached to an electric apparatus.

DE 9311023 describes an installation box with diametrically disposed guide blocks which are guided in a groove with the aid of screws in order to be able to mount the box in a wall. The guide blocks are connected to the box by the intermediary of flexible flaps which are injection moulded on the box. When a user tightens a screw, the guide block will move up on the rear side or the wall in which the box is to be mounted, the flap because of its flexibility being displaced out of the groove by the guide block in order progressively to spread itself out against the rear side of said wall the more the screw is tightened. In boxes of this type, it is the intention that a user will be able to mount, for example, electric sockets of different types. A box of this type is subjected continuously to severe stresses when a user is to pull out the plug to a connected electric apparatus. The drawback inherent in the box according to DE 9311023 is that the abutment surface between the flexible flaps and the rear side of the wall will not be particularly large and, as a result, no stable anchorage will be obtained in the panel wall or partition in which the box is to be mounted. Since the flaps are moreover made of a flexible material, they will fold and the outer portion of the flaps cannot, therefore, constitute a support behind the panel wall. A further drawback is that the flaps are injection moulded in the box, which implies that the flaps cannot be adapted to the ambient surroundings and the panel wall in which they are to be mounted.

EP 1303017 describes a box with two fixing elements which are formed as thin and smooth strips. Close to the open end of the fixing elements, there are guide sections with which the open end is guided in a guide groove in the wall of the casing of the installation box. A screw is threaded in a hole in the guide section and, on tightening of the screw, the guide section is drawn along the groove so that the fixing element extends out and fixes the installation box in the hole in which it is to be mounted. The drawback inherent in this fixing element is exactly the same as in the case with the fixing element in DE 9311023, that the abutment surface between the mounting devices and the rear side of the wall will not be particularly large and that, as a result, no stable fixing is obtained in the panel wall in which the box is to be mounted. This becomes particularly manifest when the box is to be mounted in a thicker wall. The size of the abutment surface between the mounting device and the rear side of the wall in which the box is to be mounted moreover depends on indications on the mounting device which guide how the mounting device is to be flipped out. The drawback in this is that said abutment surface between the mounting devices and the rear side of the wall will be limited.

EP 923 176 A1, which is considered to be the closest prior art, uses a different approach, in that it comprises clamping parts (20) which are initially flush to the sides of the box in a channel, but which gradually move into a horizontal clamping position as the screws (21) are tightened (see figure 9A-D). This is because the parts (20) are initially hinged by a thin part (23) and the screw hole (33, 35, 36) is designed to gradually rotate the clamp as it is tightened by the screw. This arrangement gives good clamping, but has the disadvantage that the thin part (23) is designed to break if the clamp is tightened further than a certain point e.g. to clamp a thin board (see fig. 9D). This means it is not reversible without the clamps being unscrewed until they fall off and are lost in the cavity.

### Objects of the invention

The object of the present invention is to realise a solution to the above-outlined problems and thus propose an improved installation box of the type described by way of introduction.

### Brief summary of the invention

The above objects will be attained by means of the present invention as defined in independent Claim 1. Suitable embodiments of the present invention are disclosed in the appended subclaims.

There is thus defined according to the present invention an installation box comprising a box body, with a bottom and a side wall disposed substantially at right angles to said bottom, one edge on said side wall defining an opening on the box body opposing said bottom, the side wall including, on the outside, at least one groove which extends in a direction from said edge and down towards the bottom of the box body, the installation box further including at least one activation device intended, in said groove, to activate each respective mounting device in order to permit mounting of the installation box in, for example, a wall or a roof, the mounting device including an elongate element and a guide member insertable in said groove, the elongate element being, with a first end, secured to the installation box and, with a second end, secured at said guide portion, the activation device being disposed to be able to displace the guide portion in the longitudinal direction of the groove and thereby activate the mounting device, characterised in that the elongate element of the mounting device, on that surface which faces out from the box, includes at least one elevation in order to permit securing of the box in at least one fixed position.

According to the present invention, the advantage will be afforded that the elevations on the elongate elements entail that the mounting devices of the box will be more rigid and, as a result, the mounting devices can fix the box stably in the wall or the roof where the box is to be mounted. Moreover, the at least one elevation on an elongate element entails that the box is extremely well suited to be able to be secured in at least one fixed position. Naturally, the position of the elevation on the elongate element may be adapted in relation to the fixed position which it is intended to be provided for.

According to one preferred embodiment of the present invention, said first end of said elongate element may be removably secured to the installation box. By such means, the box and its mounting devices may be adapted to the ambient surroundings and that wall of that roof where the box is to be mounted. By such means, it is possible to replace the mounting device, depending upon the type of material desired by a user in the mounting device, and also depending upon in which of several fixed positions a user wishes to secure the box.

Advantageously, said elongate element and said guide portion may be connected by the intermediary of at least one connecting member. Advantageously, said connecting member may, with its one end, be secured at that end of the guide portion which, in the mounted state, is located most proximal the bottom of the box and, with its other end, be secured in that end of the elongate element which, in the mounted state, is located most proximal the bottom of the box.

According to yet a further preferred embodiment, said activation device may run through said guide portion of the mounting device in order to permit stepless adjustment of the position of the mounting device along said groove.

According to still a further advantageous embodiment, said at least one elevation may be disposed to be urged out from the box body on activation of said activation device. By such means, the abutment surface between the mounting device and that wall/roof in which the device is to be mounted will be large, which in turn entails a stable securing of the box in the wall/the roof.

According to still a further advantageous embodiment, said at least one elevation may extend transversely of the longitudinal direction of the mounting device. By such means, there will be obtained as stable a securement of the box in the wall/the roof as possible.

According to still a further advantageous embodiment, the installation box may include at least one tongue-shaped portion and said guide portion may include at least one projecting portion which cooperates with said at least one tongue-shaped portion in order to prevent the mounting device from detaching from said groove. The advantage with this is that the guide portion constantly runs in the groove and, as a result, cannot be lost. Advantageously, said at least one tongue-shaped portion may extend from the side wall of the box body and in over at least a part of said groove on at least one side of and along at least a part of said groove of the box.

According to yet a further advantageous embodiment, the activation device may be in the form of a screw.

According to still a further advantageous embodiment, the mounting device may include at least two elevations.

### Brief description of the accompanying drawings

The present invention will now be described in greater detail hereinbelow, with the aid of embodiments and with reference to the accompanying Drawings. In the accompanying Drawings:
Fig. 1 is a perspective view of one embodiment of the installation box according to the present invention provided with a mounting device in an unmounted state;
Fig. 2 is a perspective view of a mounting device according to the present invention;
Fig. 3 is a perspective view of the installation box according to the present invention with the underside of the box facing upwards, where the box has not been provided with mounting devices in the diametrically disposed grooves; and
Fig. 4 shows the installation box according to the present invention in a mounted state in a wall.

### Detailed description of the invention

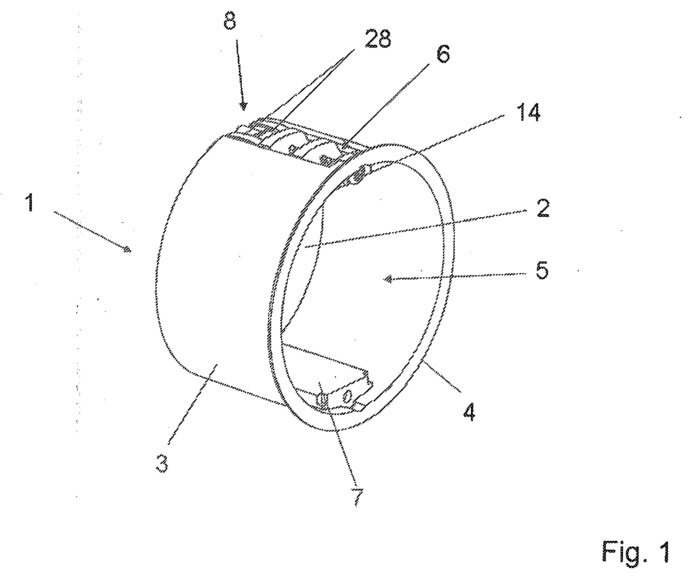

Referring to the Drawings, Figs. 1-4 show one embodiment of the present invention, applied to an installation box which permits said installation box to be secured behind a wall or a roof in at least one fixed position. It should be emphasised forthwith that the present invention is not by any means restricted to this type of installation box, but may be applied to all types of installation boxes.

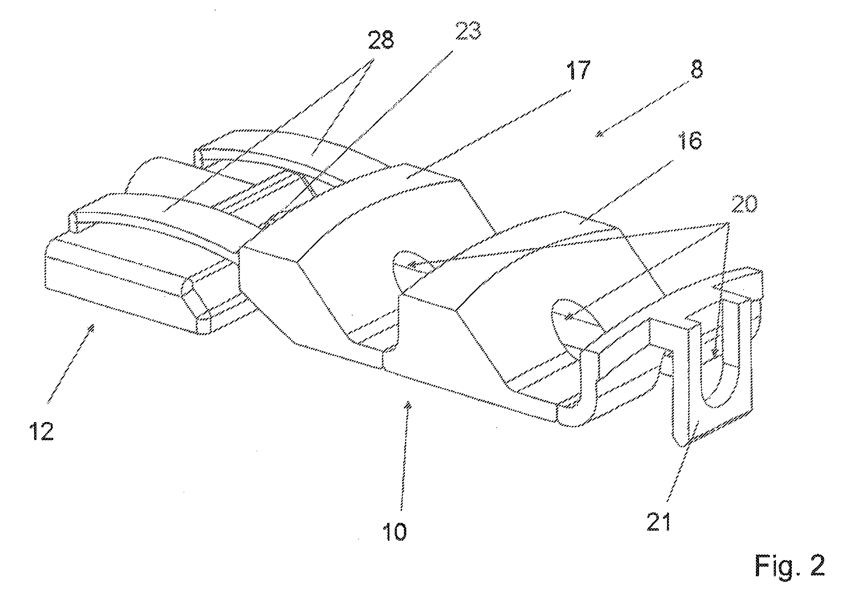

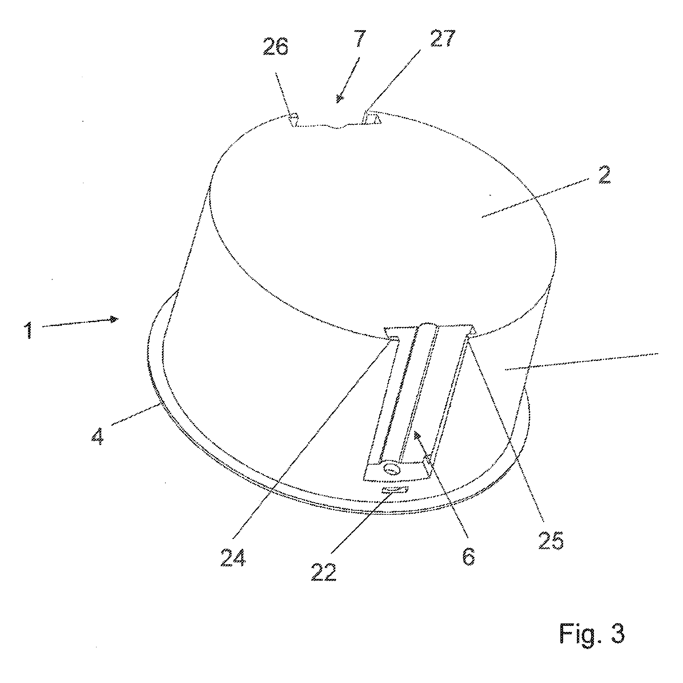

Fig. 1 shows an installation box 1 comprising a box body with a bottom 2 which is connected substantially at right angles to a side wall 3. The side wall 3 includes an edge 4 which defines an opening 5 in the box body. The opening 5 is located opposite to the bottom 2 of the box and is intended to constitute a mounting space for, for example terminals and electric sockets of different types. On the outside of the side wall 3, there are moreover disposed two elongate grooves 6, 7 (see also Fig. 3) which extend in a direction from the edge 4 on the side wall 3 and down towards the bottom 2 of the installation box 1. In this embodiment, the elongate side grooves are two in number, but it is naturally conceivable that the side wall 3 of the installation box is provided with one groove or more than the two grooves 6, 7 which are disclosed in the embodiment in the figures. The two grooves 6, 7 in Figs. 1 and 3 are located opposite to one another on the substantially circular installation box 1, but the side grooves 6, 7 may naturally also be placed in other ways in relation to one another. In order to be able to mount the box 1 in, for example, a wall or a roof, the installation box 1 includes two mounting devices 8, 9 (only one of them is shown in Fig. 1) which each include an elongate element 10 (see Fig. 2) and a guide portion 12 (see Fig. 2). In order to be able to adjust the mounting device 8 in accordance with the thickness of the wall or the roof in which the installation box 1 is to be mounted, a screw 14 (only one screw is shown in the figures) is disposed to run along the groove 6. Correspondingly, a screw also runs in the groove 7. The screw 14 runs through the guide portion 12 and may thereby displace the guide portion 12 in the longitudinal direction of the groove 6 and thereby activate the mounting device 8. In a manner corresponding to that described above, the screw also runs in the groove 7 through the guide portion of the mounting device 9, and this guide portion may thereby be displaced in the longitudinal direction of the groove 7 and the mounting device 9 is thereby activated.

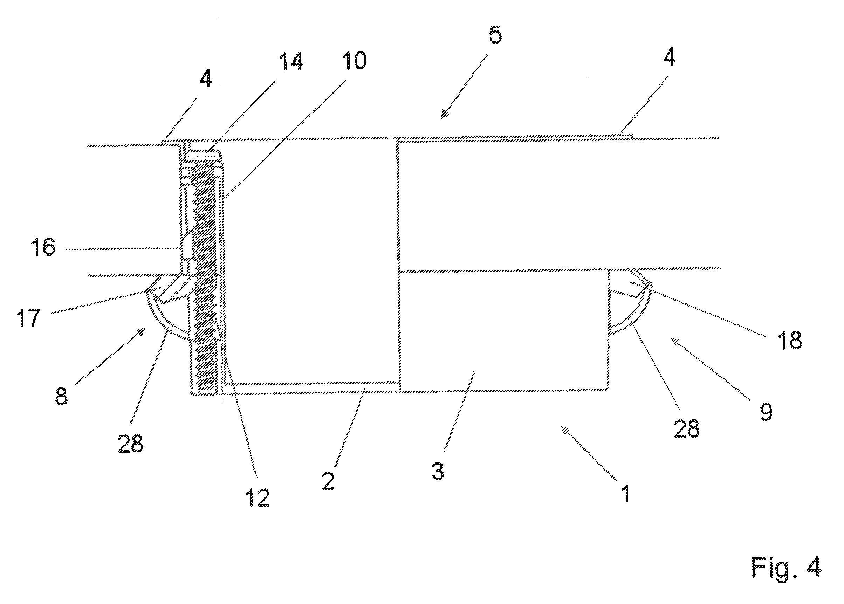

Fig. 2 shows a mounting device 8 whose elongate element 10 includes two ridges or elevations 16, 17. Naturally, the elevation may be one in number, but also more than two elevations as disclosed is possible. The elevations 16, 17 which are disposed on the elongate elements 10 are intended to make for securement in fixed positions in the wall or the roof. When an operator activates the screw 14 (see Figs. 1 and 4), that elevation which is disposed most proximal the bottom 2 of the box 1 will be pressed out first and, according as the operator tightens the screw 14, one by one of the elevations 16, 17 will be pressed out in order to be able to abut against the rear side of the wall or the roof in which the installation box 1 is to be mounted. In order to attain the best possible fixing purchase behind the wall or the roof, the elevations 16, 17 on the elongate element 10 are disposed transversely of the longitudinal direction of the elongate element 10. In Figs. 1 and 2, it is apparent that the mounting device 8 on that surface which, in the mounted state, faces towards the box body includes a recess 20 in order that the screw 14 will be able to run freely past the elongate element 10 of the mounting device 8. By such means, it is possible for the mounting device 8, in the unmounted state, to abut against the side wall 3 of the box body and thereby facilitate mounting of the installation box 1 in the wall/the roof. On that surface which, in the mounted state, faces away from the box body, it is shown how the elevations 16, 17 are disposed on the elongate element 10. The elongate element 10 will have an undulating appearance.

In order to make it possible for an operator to replace the mounting devices 8, 9, the mounting devices 8, 9 are removably fixed to the installation box 1. In the embodiment shown on the Drawings, this is realised in that the mounting devices 8, 9 are provided with a fixing portion 21 (only the fixing portion for the mounting device 8 is visible in the figures). The fixing portion 21 of the mounting device 8 is passed into an opening 22 (see Fig. 3), this opening 22 being disposed at that end of the groove 6 which lies most proximal the edge 4 of the installation box 1. In that the fixing portion 21 is provided with the recess 20 (see Fig. 2), the screw 14 can, on mounting in the box 1, be passed through said recess 20 of the fixing portion 21 and by such means removably secure the mounting device 8 to the installation box 1. The guide portion 12 of the mounting device 8 is provided with a hole, bore or the like 23 through which the screws 14 run in order to be able to displace the guide portions 12 in the longitudinal direction of the groove 6. The position of the mounting device 8 along the elongate grooves 6 may thereby be adjusted steplessly with the aid of the screw 14. In a manner corresponding to that for the mounting device 8, the mounting device 9 is also provided with a fixing portion and a guide portion with a hole in order to be able removably to secure the mounting device 9 at the installation box 1 and in order to be able to steplessly adjust the mounting device 9 along the groove 7 with the aid of the screw.

Fig. 3 shows how a tongue-shaped portion 24, 25 and 26, 27, respectively from the box body projects in over a part of said grooves 6 and 7, respectively, on both sides of the elongate groove 6 and 7, respectively. The tongue-shaped portions 24, 25, 26, 27 which extend in a direction from the edge 4 of the side wall 3 down towards the bottom 2 of the box body are intended to convert torque from the screw to a linear guiding of the guide portion of the mounting device 8, 9 and that said guide portion will not be able to pivot out from the grooves 6, 7 of the box 1 in the mounted state. This latter is prevented in that the guide portion of the mounting device 8, 9 is wider than that opening which is formed between the tongue-shaped portions 24, 25 and 26, 27, respectively disposed on opposing sides of the grooves 6, 7. It is also possible that the guide portion of each respective mounting device 8, 9 be provided with projecting portions which cooperate with the tongue-shaped portions 24, 25 and 26, 27, respectively.

It is shown in Figs. 1, 2 and 4 how the elongate element 10 of the mounting device 8 is connected to the guide portion 12 by the intermediary of a connecting member 28. In the figures, the connecting member 28 is secured with its one end at that end of the guide portion 12 which, in the mounted state, is located most proximal the bottom 2 of the box 1 and, with its other end at that end of the elongate element 10 which, in the mounted state, is located most proximal the bottom 2 of the box 1. The connecting member 28 which, in the figures, consists of two separate elongate parts, extends from the guide portion 12 in an arc thereover to the elongate element 10. In this embodiment, the second mounting device 9 is also disposed in a manner similar to the mounting device 8.

It is shown in Fig. 4 how the installation box 1 has been mounted in a wall. Both of the screws have each activated its respective mounting device, the respective elevation 17, 18 of the two mounting devices 8, 9 having been pressed out and thereby abutting against the rear side of the wall.

## Claims

1. An installation box (1) comprising a box body with a bottom (2) and a side wall (3) disposed substantially at right angles to said bottom (2), one edge (4) on said side wall (3) defining an opening (5) on the box body opposite said bottom (2), the side wall (3) including on the outside at least one groove (6, 7) which extends in a direction from said edge (4) and down towards the bottom (2) of the box body, the installation box (1) further including at least one activation device (14) in the form of a threaded bolt or screw intended, in said groove, to activate a respective mounting device (8, 9) in order to permit mounting of the installation box (1) in, for example, a wall or a roof, the mounting devices (8, 9) including an elongate element (10) and a guide portion (12) insertable in said groove (6, 7), the elongate element (10) being, with a first end, secured in a hinged manner to a fixing portion (21) at the installation box (1) and being, with a second end, secured in a hinged manner at said guide portion (12), the activation device (14) being disposed to be able to displace the guide portion (12) in the longitudinal direction of the groove (6, 7) and thereby activate the mounting device (8, 9), the elongate element (10) of the mounting device (8, 9) on that surface which faces out from the box including at least one elevation (16, 17) in order to make for securement of the box (1) in at least one fixed position, **characterised in that** said elongate element (10) and said guide portion (12) are interconnected by the intermediary of at least one connecting member (28) which, with its one end, is secured in a hinged manner at that end of the guide portion (12) which, in the mounted state, is located most proximal the bottom of the box (1), and with its other end is secured in a hinged manner **in that** end of the elongate element (10) which, in the mounted state, is located most proximal the bottom of the box (1), in such a way that when the activation device is actuated, the elongate elements (10) and the connecting members (28) fold outward from the sides of the box in order to clamp the box securely in a reversible manner.

2. The installation box as claimed in Claim 1, **characterised in that** said first end of said elongate element (10) may be releasably secured to the installation box (1).

3. The installation box as claimed in any of the preceding Claims, **characterised in that** said activation device (14) runs through said guide portion (12) of the mounting device (8, 9) in order to permit stepless adjustment of the position of the mounting device (8, 9) along said groove (6, 7).

4. The installation box as claimed in any of the preceding Claims, **characterised in that** said at least one elevation (16, 17) is disposed to be pressed out from the box body on activation of said activation device (14).

5. The installation box as claimed in any of the preceding Claims, **characterised in that** said at least one elevation (16, 17) extends transversely of the longitudinal direction of the mounting device (8, 9).

6. The installation box as claimed in any of the preceding Claims, **characterised in that** the installation box (1) includes at least one tongue-shaped portion (24, 25, 26, 27) and that said guide portion (12) includes at least one projecting portion which cooperates with said at least one tongue-shaped portion (24, 25, 26, 27) in order to prevent the mounting device (8, 9) from becoming detached from said groove (6, 7).

7. The installation box as claimed in Claim 6, **characterised in that** said at least one tongue-shaped portion (24, 25, 26, 27) extends from the side wall (3) of the box body and in over at least a part of said groove (6, 7) on at least one side of and along at least a part of said groove (6, 7) of the box (1).

8. The installation box as claimed in any of the preceding Claims, **characterised in that** the activation device is a screw (14).

9. The installation box as claimed in any of the preceding Claims, **characterised in that** the mounting device (8, 9) includes at least two elevations (16, 17).

## Patentansprüche

1. Installationskasten (1), umfassend:
einen Kastenkörper mit einer Unterseite (2) und einer Seitenwand (3), die im Wesentlichen in einem rechten Winkel zu der Unterseite (2) angeordnet ist,
eine Kante (4) an der Seitenwand (3), die eine Öffnung (5) an dem Kastenkörper gegenüber der Unterseite (2) definiert,
wobei die Seitenwand (3) an der Außenseite mindestens eine Nut (6, 7) aufweist, die sich in einer Richtung von der Kante (4) und nach unten zu der Unterseite (2) des Kastenkörpers erstreckt,
wobei der Installationskasten (1) ferner mindestens eine Aktivierungsvorrichtung (14) in der Nut in Form eines Gewindebolzens oder Schraube aufweist, um eine zugehörige Montagevorrichtung (8, 9) zu aktivieren, damit der Installationskasten (1) zum Beispiel an einer Wand oder auf einem Dach angebracht werden kann,
wobei die Montagevorrichtungen (8, 9) ein längliches Element (10) und einen Führungsabschnitt (12) aufweisen, der in die Nut (6, 7) einführbar ist,
wobei das längliche Element (10) mit einem ersten Ende und über eine Scharnierbefestigung an einem Befestigungsabschnitt (21) an dem Installationskasten (1) befestigt ist und mit einem zweiten Ende über eine Scharnierbefestigung an dem Führungsabschnitt (12) befestigt ist,
wobei die Aktivierungsvorrichtung (14) angeordnet ist, um den Führungsabschnitt (12) in Längsrichtung der Nut (6, 7) zu verschieben und dadurch die Montagevorrichtung (8, 9) zu aktivieren, wobei das längliche Element (10) der Montagevorrichtung (8, 9) auf der Oberfläche, die aus dem Kasten zeigt, mindestens eine Erhöhung (16, 17) aufweist, um die Sicherung des Kastens (1) in mindestens einer festen Position zu gewährleisten,
**dadurch gekennzeichnet, dass**
das längliche Element (10) und der Führungsabschnitt (12) mittels mindestens eines Verbindungselements (28) miteinander verbunden sind, das an seinem einen Ende durch ein Scharnier an dem Ende des Führungsabschnitts (12) befestigt ist, der in angebrachtem Zustand der Unterseite des Kastens (1) am nächsten ist, und wobei das andere Ende durch ein Scharnier an dem Ende des länglichen Elements (10) befestigt ist, das der Unterseite des Kastens (1) am nächsten ist, sodass bei Betätigung der Aktivierungsvorrichtung die länglichen Elemente (10) und die Verbindungselemente (28) von den Seiten des Kastens nach außen auseinandergeklappt werden, um den Kasten sicher und umkehrbar festzuklemmen.

2. Installationskasten nach Anspruch 1, **dadurch gekennzeichnet, dass** das erste Ende des länglichen Elements (10) lösbar an dem Installationskasten (1) befestigt sein kann.

3. Installationskasten nach einem der vorherigen Ansprüche, **dadurch gekennzeichnet, dass** die Aktivierungsvorrichtung (14) durch den Führungsabschnitt (12) der Montagevorrichtung (8, 9) verläuft, um eine stufenlose Einstellung der Position der Montagevorrichtung (8, 9) entlang der Nut (6, 7) zu ermöglichen.

4. Installationskasten nach einem der vorherigen Ansprüche, **dadurch gekennzeichnet, dass** mindestens eine Erhöhung (16, 17) angeordnet ist, um bei Aktivierung des Aktivierungskörpers (14) aus dem Kastenkörper gedrückt zu werden.

5. Installationskasten nach einem der vorherigen Ansprüche, **dadurch gekennzeichnet, dass** sich mindestens eine Erhöhung (16, 17) quer oder in Längsrichtung zu der Montagevorrichtung (8, 9) erstreckt.

6. Installationskasten nach einem der vorherigen Ansprüche, **dadurch gekennzeichnet, dass** der Installationskasten (1) mindestens einen zungenförmigen Abschnitt (24, 25, 26, 27) aufweist und dass der Führungsabschnitt (12) mindestens einen herausragenden Abschnitt aufweist, der mit dem mindestens einen zungenförmigen Abschnitt (24, 25, 26, 27) zusammenwirkt, um zu verhindern, dass sich die Montagevorrichtung (8, 9) von der Nut (6, 7) löst.

7. Installationskasten nach Anspruch 6, **dadurch gekennzeichnet, dass** sich mindestens ein zungenförmiger Abschnitt (24, 25, 26, 27) von der Seitenwand (3) oder dem Kastenkörper und über mindestens einen Teil der Nut (6, 7) auf mindestens einer Seite und entlang mindestens eines Teils der Nut (6, 7) des Kastens (1) erstreckt.

8. Installationskasten nach einem der vorherigen Ansprüche, **dadurch gekennzeichnet, dass** die Aktivierungsvorrichtung eine Schraube (14) ist.

9. Installationskasten nach einem der vorherigen Ansprüche, **dadurch gekennzeichnet, dass** die Montagevorrichtung (8, 9) mindestens zwei Erhöhungen (16, 17) aufweist.

## Revendications

1. Boîte d'installation (1) comprenant un corps de boîte avec un fond (2) et une paroi latérale (3) disposée substantiellement à angle droit par rapport audit fond (2), un bord (4) sur ladite paroi latérale (3) définissant une ouverture (5) sur le corps de boîte, opposée audit fond (2), la paroi latérale (3) comportant, à l'extérieur, au moins une gorge (6, 7) qui s'étend dans une direction depuis ledit bord (4) en descendant vers le fond (2) du corps de boîte, la boîte d'installation (1) comportant en outre au moins un dispositif d'actionnement (14) sous la forme d'un boulon fileté ou d'une vis filetée destiné(e), dans ladite gorge, à actionner un dispositif de montage respectif (8, 9) afin de permettre le montage de la boîte d'installation (1) par exemple dans un mur ou un toit, les dispositifs de montage (8, 9) comportant un élément allongé (10) et une portion de guidage (12) pouvant être insérée dans ladite gorge (6, 7), l'élément allongé (10) étant fixé par une première extrémité, de manière articulée à une portion de fixation (21), à la boîte d'installation (1) et étant fixé par une deuxième extrémité de manière articulée à ladite portion de guidage (12), le dispositif d'actionnement (14) étant disposé de manière à pouvoir déplacer la portion de guidage (12) dans la direction longitudinale de la gorge (6, 7) pour ainsi actionner le dispositif de montage (8, 9), l'élément allongé (10) du dispositif de montage (8, 9) sur la surface tournée vers l'extérieur de la boîte comportant au moins une partie saillante (16, 17) afin d'assurer la fixation de la boîte (1) dans au moins une position fixe, **caractérisée en ce que** ledit élément allongé (10) et ladite portion de guidage (12) sont connectés l'un à l'autre par l'intermédiaire d'au moins un organe de connexion (28) qui est fixé par une extrémité de manière articulée à l'extrémité de la portion de guidage (12) qui, dans l'état monté, est située le plus près du fond de la boîte (1), et par son autre extrémité de manière articulée dans l'extrémité de l'élément allongé (10) qui, dans l'état monté, est située le plus près du fond de la boîte (1), de telle sorte que lorsque le dispositif d'actionnement est actionné, les éléments allongés (10) et les organes de connexion (28) soient pliés vers l'extérieur depuis les côtés de la boîte afin de serrer la boîte fixement de manière réversible.

2. Boîte d'installation selon la revendication 1, **caractérisée en ce que** ladite première extrémité dudit élément allongé (10) peut être fixée de manière amovible à la boîte d'installation (1).

3. Boîte d'installation selon l'une quelconque des revendications précédentes, **caractérisée en ce que** ledit dispositif d'actionnement (14) s'étend à travers ladite portion de guidage (12) du dispositif de montage (8, 9) afin de permettre un ajustement sans gradation de la position du dispositif de montage (8, 9) le long de ladite gorge (6, 7).

4. Boîte d'installation selon l'une quelconque des revendications précédentes, **caractérisée en ce que** ladite au moins une partie saillante (16, 17) est disposée de manière à être pressée hors du corps de boîte lors de l'actionnement dudit dispositif d'actionnement (14).

5. Boîte d'installation selon l'une quelconque des revendications précédentes, **caractérisée en ce que** ladite au moins une partie saillante (16, 17) s'étend transversalement par rapport à la direction longitudinale du dispositif de montage (8, 9).

6. Boîte d'installation selon l'une quelconque des revendications précédentes, **caractérisée en ce que** la boîte d'installation (1) comporte au moins une portion en forme de langue (24, 25, 26, 27) et **en ce que** ladite portion de guidage (12) comporte au moins une portion saillante qui coopère avec ladite portion en forme de langue (24, 25, 26, 27) afin d'empêcher que le dispositif de montage (8, 9) ne se détache de ladite gorge (6, 7).

7. Boîte d'installation selon la revendication 6, **caractérisée en ce que** ladite au moins une portion en forme de langue (24, 25, 26, 27) s'étend depuis la paroi latérale (3) du corps de boîte et sur au moins une partie de ladite gorge (6, 7) sur au moins un côté de, et le long d'au moins une partie de, ladite gorge (6, 7) de la boîte (1).

8. Boîte d'installation selon l'une quelconque des revendications précédentes, **caractérisée en ce que** le dispositif d'actionnement est une vis (14).

9. Boîte d'installation selon l'une quelconque des revendications précédentes, **caractérisée en ce que** le dispositif de montage (8, 9) comporte au moins deux parties saillantes (16, 17).
